# EUROPÄISCHE PATENTANMELDUNG

(11) **EP 4 206 251 A1**
(43) Veröffentlichungstag der Anmeldung: **05.07.2023**
(21) Anmeldenummer: 22150090.3
(22) Anmeldetag: 03.01.2022
(51) Int. Cl.: C08G 18/22, C08G 18/24, C08G 18/36, C08G 18/38, C08G 18/48, C08G 18/66, C08G 18/76, C08G 18/79, C09D 175/04

(54) **POLYURETHANZUSAMMENSETZUNG GEEIGNET ALS BODENBESCHICHTUNG MIT EINSTELLBARER TOPFZEIT**

(71) Anmelder: Sika Technology AG, 6340 Baar (CH)
(72) Erfinder: RAS, Marcel, 8103GK Raalte (NL); BORKENT, Ronald, 7411KZ Deventer (NL)
(74) Vertreter: Sika Patent Attorneys

(57) **Zusammenfassung**

Die vorliegende Erfindung betrifft eine Polyurethanzusammensetzung umfassend eine erste Komponente **A** und eine zweite Komponente **B,** wobei die erste Komponente A eine Polyolmischung P aufweist, enthaltend mindestens ein Polyol P1 mit einem durchschnittlichen Molekulargewicht von 800 bis 30'000 g / mol, und die zweite Komponente B mindestens ein aromatisches Polyisocyanat umfasst. Die Polyurethanzusammensetzung enthält zusätzlich mindestens einen Füllstoff, sowie
mindestens einen Zinnkatalysator oder einen Bismutkatalysator für die Reaktion von Hydroxylgruppen und Isocyanatgruppen, der Thiokomplexe bilden kann, und mindestens eine Verbindung, die mindestens eine Thiolgruppe aufweist.

Die Polyurethanzusammensetzungen eignen sich zur Herstellung von Bodenbeschichtungen und weisen unabhängig von den Aushärtungsbedingungen sowohl eine lange Topfzeit wie auch eine kurze Aushärtungszeit auf, welche bei Bedarf angepasst werden kann.

## Beschreibung

### Technisches Gebiet

Die Erfindung betrifft das Gebiet der Polyurethanzusammensetzungen und ihre Verwendung, insbesondere als Bodenbeschichtung.

### Stand der Technik

Zweikomponentige Polyurethanzusammensetzungen auf Basis von Polyolen und Polyisocyanaten werden bereits seit langem als Bodenbeschichtungen eingesetzt. Zweikomponentige Polyurethanzusammensetzungen haben gegenüber einkomponentigen den Vorteil, dass sie nach dem Mischen schneller durchhärten, insbesondere bei grösseren Schichten, und deshalb nach kürzerer Zeit begehbar sind. Für den Einsatz als Bodenbeschichtungen werden hohe Ansprüche in Bezug auf Festigkeit und Anhaftungskräfte an solche Zusammensetzungen gestellt.

Diese sollen unabhängig von den Aushärtungsbedingungen erreicht werden und sowohl eine lange Topfzeit wie auch eine kurze Aushärtungszeit aufweisen. Ein gutes Mass für die Aushärtungszeit geben sowohl die Klebfreizeit als auch die Shore A-Härte 60. Die Klebfreizeit gibt einen Wert wieder, der den Abschluss der Durchhärtung der Oberflächenhaut anzeigt, die dann nicht mehr klebrig ist. Die Shore A-Härte 60 ist ein Indiz dafür, wann die Bodenbeschichtung begehbar ist und somit weiterbearbeitet werden kann.

Wünschenswert wären eine Topfzeit von 15 min - 60 min, insbesondere 20 min - 45 min Klebfreizeit von 20 min - 300 min, insbesondere 30 min - 80 min, eine Zeitdauer von der Mischung bis zum Erreichen einer Shore A-Härte 60 von 30 min - 300 min, insbesondere 30 min - 100 min, bei Aushärtungsbedingungen mit einem Temperaturbereich von 8 °C bis 35 °C, insbesondere bei 23 °C, vorzugsweise bei 50 % relativer Luftfeuchtigkeit.

Besonders wünschenswert wäre es, Topfzeit und Aushärtungszeit auf der Baustelle den vorherrschenden Aushärtungsbedingungen anzupassen, respektive nach Wunsch einzustellen.

Für die Anwendung von Polyurethanzusammensetzungen als Bodenbeschichtungen ist es generell wünschenswert, eine genügend lange Topfzeit für die Applikation auf das Substrat mit einer anschliessend zügigen Aushärtung und schneller Überarbeitbarkeit/Begehbarkeit kombinieren zu können. Dies lässt sich mit heutigen Zweikomponentenzusammensetzungen aber nicht erreichen. Entweder ist die Topfzeit zu kurz bei Zusammensetzungen, die rasch aushärten und Festigkeit aufbauen, oder aber die Aushärtung und der Festigkeitsaufbau sind langsam, wenn Zusammensetzungen mit langer Topfzeit verarbeitet werden.

Es wurden in anderen technischen Gebieten zweikomponentige Polyurethanzusammensetzungen entwickelt, die eine lange, sogar innerhalb gewisser Grenzen einstellbare Topfzeit aufweisen, so dass eine Verarbeitung auch grösserer Bau- oder Fertigungsteile möglich ist, aber die nach Applikation auch sehr rasch aushärten und innert Stunden bis wenigen Tagen, Festigkeiten und Elastizität im Sinne von strukturellen Verklebungen aufweisen. Eine solche zweikomponetige Polyurethanzusammensetzung im Bereich des strukturellen Klebens ist in WO 2019/002538 A1 offenbart. Diese Veröffentlichung lehrt spezielle Katalysatorsysteme umfassend einen Metallkatalysator und Thiolgruppen-haltige Verbindungen, welche eine einstellbare Topfzeit und anschliessend eine rasche Aushärtung der Zusammensetzung erlauben.

Im Bereich der Lackindustrie offenbart EP 0454219 Polyurethanzusammensetzung basierend auf Polyacrylpolyolen, aliphatischen Polyisocyanaten, einen mit Trimethylolpropane tris(3-mercaptopropionate) komplexierten Dibutylzinndilaurat-Katalysator und einem hohen Anteil an organischen Lösungsmitteln.

US 2019/0106527 A1 offenbart Beschichtungen für Fahrzeuge umfassend ein Polyol, vorzugsweise Polyesterpolyole oder Polyacrylatpolyole, ein Polyisocyanat, einen Katalysator, eine tertiäre Säure, gegebenenfalls ein Komplexbildner, der mindestens eine -SH-Gruppe enthält und einem hohen Anteil an organischen Lösungsmitteln.

Es wäre daher wünschenswert, Polyurethanzusammensetzungen für Bodenbeschichtungen zur Verfügung zu stellen, welche die mechanischen

Anforderungen erfüllen und unabhängig von den Aushärtungsbedingungen sowohl eine lange Topfzeit wie auch eine kurze Aushärtungszeit aufweisen, welche bei Bedarf angepasst werden kann.

### Darstellung der Erfindung

Aufgabe der vorliegenden Erfindung ist es daher, eine Polyurethanzusammensetzungen für Bodenbeschichtungen zur Verfügung zu stellen, welche die mechanischen Anforderungen erfüllen und unabhängig von den Aushärtungsbedingungen sowohl eine lange Topfzeit wie auch eine kurze Aushärtungszeit aufweisen, welche bei Bedarf angepasst werden kann.

Überraschenderweise wird diese Aufgabe mit der erfindungsgemässen Polyurethanzusammensetzung gemäss Anspruch 1 gelöst. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft Polyurethanzusammensetzung umfassend eine erste Komponente **A** und eine zweite Komponente **B,** wobei
- die erste Komponente **A**
   - eine Polyolmischung **P** aufweist, enthaltend
      - mindestens ein Polyol **P1** mit einem durchschnittlichen Molekulargewicht von 800 bis 30'000 g / mol, vorzugsweise 850 bis 20'000 g / mol, bevorzugter 900 bis 10'000 g / mol, wobei das Polyol **P1:**
         ein polyhydroxyfunktionelles Fett und / oder ein polyhydroxyfunktionelles Öl ist, oder
         ein Polyol, das durch chemische Modifizierung von natürlichen Fetten und / oder natürlichen Ölen erhalten wird; und
      - vorzugsweise mindestens ein Polyol **P2** ausgewählt aus der Gruppe bestehend aus Polyesterpolyolen und Polyetherpolyolen; und
   - die zweite Komponente **B**
      - mindestens ein aromatisches Polyisocyanat **I** umfasst;
         wobei die Polyurethanzusammensetzung zusätzlich 5 Gew.-% bis 70 Gew.-%, vorzugsweise 20 Gew.-% bis 50 Gew.-%, mindestens eines Füllstoffs **F,** bezogen auf das Gesamtgewicht der Polyurethanzusammensetzung, aufweist; sowie
      - mindestens einen Zinnkatalysator **KSN** für die Reaktion von Hydroxylgruppen und Isocyanatgruppen umfasst, der Thiokomplexe bilden kann, und mindestens eine Verbindung **T,** die mindestens eine Thiolgruppe aufweist, und das molare Verhältnis aller Thiolgruppen der mindestens einen Verbindung **T** zu allen Metallatomen des mindestens einen Zinnkatalysators **KSN (T/KSN)** von 30 - 1200 liegt und das molare Verhältnis aller NCO-Gruppen der Polyurethanzusammensetzung zu allen Metallatomen des mindestens einen Zinnkatalysators **KSN (NCO/KSN)** von 600 - 2600 liegt; oder
      - mindestens einen Bismutkatalysator **KBI** für die Reaktion von Hydroxylgruppen und Isocyanatgruppen umfasst, der Thiokomplexe bilden kann, und mindestens eine Verbindung **T,** die mindestens eine Thiolgruppe aufweist, und das molare Verhältnis aller Thiolgruppen der mindestens einen Verbindung **T** zu allen Metallatomen des mindestens einen Bismutkatalysators **KBI (T/KBI)** von 300 - 1200 liegt und das molare Verhältnis aller NCO-Gruppen der Polyurethanzusammensetzung zu allen Metallatomen des mindestens einen Bismutkatalysators **KBI (NCO/KBI)** von 2000 - 12500 liegt.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Unter "Molekulargewicht" versteht man im vorliegenden Dokument die molare Masse (in Gramm pro Mol) eines Moleküls oder eines Molekül-Rests. Als "mittleres Molekulargewicht" wird das Zahlenmittel Mₙ einer polydispersen Mischung von oligomeren oder polymeren Molekülen oder Molekül-Resten bezeichnet, welches üblicherweise mittels Gelpermeationschromatographie (GPC) gegen Polystyrol als Standard bestimmt wird.

Gewichtsprozente, abgekürzt Gew.-%, bezeichnen Massenanteile eines Bestandteils einer Zusammensetzung, bezogen auf die gesamte Zusammensetzung, falls nichts anderes angeben. Die Begriffe "Masse" und "Gewicht" werden im vorliegenden Dokument synonym benutzt.

Als "primäre Hydroxylgruppe" wird eine OH-Gruppe bezeichnet, welche an ein C-Atom mit zwei Wasserstoffen gebunden ist.

Als "Topfzeit" wird in diesem Dokument die Zeit bezeichnet, innerhalb welcher die Polyurethanzusammensetzung nach dem Mischen der Komponenten verarbeitet werden kann, bevor die Viskosität durch das Voranschreiten der Vernetzungsreaktion zu hoch für eine weitere Verarbeitung geworden ist.

Der Begriff "Festigkeit" bezeichnet im vorliegenden Dokument die Festigkeit der ausgehärteten Zusammensetzung, wobei mit Festigkeit insbesondere die Zugfestigkeit und das Elastizitätsmodul (E-Modul), insbesondere im Dehnungsbereich 0.05 bis 0.25 % oder im Bereich von 0.5 bis 5.0%, gemeint sind.

Als "Raumtemperatur" wird im vorliegenden Dokument eine Temperatur von 23 °C bezeichnet.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren An-wendungs- oder Gebrauchseigenschaften, insbesondere der Viskosität und der Vernetzungsgeschwindigkeit, durch die Lagerung in einem für ihren Gebrauch relevanten Ausmass verändert.

Alle im Dokument erwähnten Industriestandards und Normen beziehen sich auf die zum Zeitpunkt der Einreichung der Erstanmeldung gültigen Fassungen.

Die "mittlere OH-Funktionalität" stellt die Anzahl der OH-Gruppen pro Polymermolekül, gemittelt über alle Polymermoleküle, dar. Enthalten beispielsweise 50% aller Polymermoleküle zwei und die anderen 50% drei Hydroxygruppen, so ergibt sich eine mittlere OH-Funktionalität von 2,5. Die mittlere OH-Funktionalität kann insbesondere durch Berechnung aus der Hydroxyzahl und dem über GPC ermittelten Molekulargewicht Mₙ ermittelt werden.

Die erfindungsgemässe Polyurethanzusammensetzung umfasst eine erste Komponente **A** und eine zweiten Komponente **B,** welche erst bei der Applikation der Polyurethanzusammensetzung gemischt werden und vorher in getrennten Verpackungen aufbewahrt werden.

Die erste Komponente **A** enthält eine Polyolmischung **P.**

Vorzugsweise beträgt der Anteil der Polyolmischung **P** 5 Gew.-% bis 90 Gew.-%, vorzugsweise 10 Gew.-% bis 80 Gew.-%, 20 Gew.-% bis 70 Gew.-%, 30 Gew.-% bis 60 Gew.-%, insbesondere 40 Gew.-% bis 50 Gew.-%, bezogen auf die Komponente **A.**

Es kann weiter vorteilhaft sein, wenn der Anteil der Polyolmischung **P** 5 Gew.-% bis 70 Gew.-%, vorzugsweise 10 Gew.-% bis 60 Gew.-%, 15 Gew.-% bis 50 Gew.-%, 20 Gew.-% bis 45 Gew.-%, insbesondere 30 Gew.-% bis 40 Gew.-%, bezogen auf das Gesamtgewicht der Polyurethanzusammensetzung, beträgt.

Die Polyolmischung **P** enthält mindestens ein Polyol **P1** mit einem durchschnittlichen Molekulargewicht von 800 bis 30'000 g / mol, vorzugsweise 850 bis 20'000 g / mol, bevorzugter 900 bis 10'000 g / mol, wobei das Polyol **P1:**
ein polyhydroxyfunktionelles Fett und / oder ein polyhydroxyfunktionelles Öl ist, oder ein Polyol, das durch chemische Modifizierung von natürlichen Fetten und / oder natürlichen Ölen erhalten wird.

Beispiele für chemisch modifizierte natürliche Fette und / oder Öle sind Polyole, die aus Epoxypolyestern oder Epoxypolyethern erhalten werden, die beispielsweise durch Epoxidierung von ungesättigten Ölen, durch anschließende Ringöffnung mit Carbonsäuren oder Alkoholen erhalten werden, Polyole, die durch Hydroformylierung und Hydrierung von ungesättigten Ölen erhalten werden, oder Polyole die aus natürlichen Fetten und / oder Ölen durch Abbauprozesse wie Alkoholyse oder Ozonolyse und anschließende chemische Verknüpfung der so erhaltenen Abbauprodukte oder Derivate davon, beispielsweise durch Umesterung oder Dimerisierung, erhalten werden. Geeignet sind auch Polyole, die durch Polyoxyalkylierung von natürlichen Ölen wie Rizinusöl erhalten werden und beispielsweise unter dem Handelsnamen Lupranol Balance^{®} der Elastogran GmbH erhältlich sind. Geeignete Abbauprodukte von natürlichen Fetten und / oder Ölen sind insbesondere Fettsäuren und Fettalkohole und Fettsäureester, insbesondere die Methylester (FAME), die beispielsweise durch Hydroformylierung und Hydrierung zu Hydroxyfettsäure derivatisiert werden können Ester.

Die oben erwähnten Polyole **P1** haben gewöhnlich ein relativ hohes durchschnittliches Molekulargewicht zwischen 800 und 30'000 g / mol, vorzugsweise zwischen 850 und 20'000 g / mol, bevorzugter zwischen 900 und 10'000 g / mol und vorzugsweise ein durchschnittliche OH-Funktionalität im Bereich von 1,6 bis 3.

Vorzugsweise ist das Polyol **P1** Rizinusöl oder eine chemische Modifikation davon, insbesondere eine chemische Modifikation von Rizinusöl, besonders bevorzugt ein Reaktionsprodukt von Rizinusöl mit Ketonharzen.

Besonders bevorzugt handelt es sich bei dem Polyol **P1** um ein Polyol mit einer OH-Zahl von 110 bis 200 mg KOH / g. Bevorzugt wird eine OH-Zahl von 140 bis 190 mg, insbesondere 140 bis 170 mg, insbesondere bevorzugt 150 bis 170 mg KOH / g.

Besonders bevorzugt werden Reaktionsprodukte von Rizinusöl mit Ketonharzen auf Cyclohexanonbasis, insbesondere solche, die beispielsweise von der Nuplex Resins GmbH, Deutschland, unter dem Namen Setathane^{®} 1150, Setathane^{®} 1155 und Setathane^{®} 1160 verkauft werden.

In dem vorliegenden Dokument wird der Begriff "Rizinusöl" vorzugsweise so verstanden, dass er Rizinusöl bedeutet, wie es im Online Römpp Chemie Lexikon (Thöme Verlag) beschrieben ist, abgerufen am 23.12.2016.

In dem vorliegenden Dokument wird der Begriff "Ketonharz" vorzugsweise so verstanden, dass er Ketonharz bedeutet, wie in Online Römpp Chemie Lexikon, Thieme Verlag, abgerufen am 23.12.2016, beschrieben.

Vorzugsweise enthält die Polyolmischung **P** mindestens ein Polyol **P2** ausgewählt aus der Gruppe bestehend aus Polyesterpolyolen und Polyetherpolyolen.

Das Polyol **P2** weist in allen Ausführungsformen bevorzugt ein mittleres Molekulargewicht im Bereich von 400 bis 6'000 g/mol, insbesondere 450 bis 5'500 g/mol, besonders bevorzugt 500 bis 5'000 g/mol, 750 bis 3'000 g/mol, am meisten bevorzugt 1'000 bis 2'000 g/mol, auf.

Das Polyol **P2** weist in allen Ausführungsformen bevorzugt eine mittlere OH-Funktionalität im Bereich von 2 bis 4, insbesondere 2 bis 3.5, besonders bevorzugt 2 bis 3, auf.

Das Polyol **P2** weist in allen Ausführungsformen bevorzugt eine OH-Zahl im Bereich von 20 bis 600 mg KOH/g, 50 bis 600 mg KOH/g, 100 bis 600 mg KOH/g, insbesondere 200 bis 600 mg KOH/g, 300 bis 600 mg KOH/g, besonders bevorzugt 350 bis 600 mg KOH/g, auf.

Als Polyetherpolyole, auch Polyoxyalkylenpolyole oder Oligoetherole genannt, sind insbesondere jene als Polymer **P2** geeignet, welche Polymerisationsprodukte von Ethylenoxid, 1,2-Propylenoxid, 1,2- oder 2,3-Butylenoxid, Oxetan, oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2-und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet als Polyol **P2** sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet als Polyol **P2** sind Polyoxyalkylendiole oder Polyoxyalkylentriole mit einem Ungesättigtheitsgrad tiefer als 0.02 mEq/g und mit einem Molekulargewicht im Bereich von 1'000 bis 15'000 g/mol, sowie Polyoxyethylendiole, Polyoxyethylentriole, Polyoxypropylendiole und Polyoxypropylentriole mit einem Molekulargewicht von 400 bis 15'000 g/mol.

Ebenfalls als Polyol **P2** besonders geeignet sind so genannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Geeignete solche Polyether-basierte Polymere P2 sind beispielsweise erhältlich unter den Handelsnamen Acclaim^{®} und Desmophen^{®} von Covestro, insbesondere Acclaim^{®} 4200, Desmophen^{®} 5034, Desmophen^{®} 1381 BT und Desmophen^{®} 28HS98, unter dem Handelsnamen Voranol^{®} von Dow, insbesondere Voranol^{®} EP 1900 und Voranol^{®} CP 4755, sowie unter dem Handelsnamen Dianol^{®} von Arkema, insbesondere Dianol^{®} 3130 HP.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Maleinsäure, Fumarsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind hydrophile Polyesterdiole, insbesondere solche, die hergestellt sind aus Adipinsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, und 1,4-Cyclohexandimethanol als zweiwertigem Alkohol.

Als Polyesterpolyole geeignet sind beispielsweise solche erhältlich unter dem Handelsnamen Kuraray^{®} von Kuraray, insbesondere Kuraray^{®} F-510, und solche erhältlich unter dem Handelsnamen K-Flex^{®} von King Industries, insbesondere K-Flex^{®} 188.

Besonders geeignete Polyole **P2** sind Polyetherpolyole, insbesondere ausgewählt aus der Liste bestehend aus Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol, am meisten bevorzugt ist Polyoxypropylentriol.

Am meisten bevorzugt ist das Polyol **P2** ein Polyetherpolyol, insbesondere ein Polyetherpolyol mit einer mittleren OH-Funktionalität von mindestens 2.5 und bevorzugt mit Propylenglykol-Repetiereinheiten im Polymerrückgrat.

Vorzugsweise beträgt das Gewichtsverhältnis des Polyols **P1** zum Polyol **P2 ((P1)** / **(P2))** von 1,25 bis 2,5, vorzugsweise 1,5 bis 2,25, am meisten bevorzugt 1,75 bis 2,0.

Vorzugsweise beträgt die Gesamtmenge der Summe des Polyols **P1** und des Polyols **P2** mehr als 75 Gew .-%, vorzugsweise als 80 Gew .-%, als 90 Gew .-%, als 95 Gew .-%, insbesondere als 98 Gew .-%, der Polyolmischung **P.**

Vorzugsweise weist die Polyolmischung **P** mehr als 80 Gew .-%, mehr als 90 Gew .- %, mehr als 95 Gew .-%, insbesondere mehr als 98 Gew .-%, der Gesamtmenge der NCO-reaktiven Gruppen der Polyurethanzusammensetzung auf.

Die zweite Komponente **B** umfasst mindestens ein aromatisches Polyisocyanat **I.**

Geeignete aromatische Polyisocyanate **I** sind insbesondere monomere Di- oder Triisocyanaten, sowie Oligomere, Polymere und Derivate von monomeren Di- oder Triisocyanate, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat. Bevorzugte aromatische monomere Di- oder Triisocyanate sind abgeleitet von MDI und/oder TDI, insbesondere von MDI.

Geeignete Oligomere, Polymere und Derivate der genannten monomeren Di- und Triisocyanate sind insbesondere abgeleitet von MDI und TDI. Davon insbesondere geeignet sind kommerziell erhältliche Typen, TDI-Oligomere wie Desmodur^{®} IL (von Bayer); weiterhin geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen darstellen, bekannt unter Handelsnamen wie Desmodur^{®} CD, Desmodur^{®} PF, Desmodur^{®} PC (alle von Bayer), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle von Bayer), Isonate^{®} M 309, Voranate^{®} M 229 und Voranate^{®} M 580 (alle von Dow) oder Lupranat^{®} M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf, vorzugsweise 2.1 bis 3.0, insbesondere 2.1 bis 2.6.

Bevorzugt sind als aromatische Polyisocyanate **B1** sind monomeres MDI oder Oligomere, Polymere und Derivate abgeleitet von MDI, insbesondere mit einer mittleren NCO-Funktionalität von 2.0 bis 4.0, vorzugsweise 2.0 bis 3.0, insbesondere 2.1 bis 2.6.

Besonders vorteilhaft handelt es sich um Oligomere, Polymere und Derivate abgeleitet von MDI, insbesondere um Oligomere abgeleitet von MDI, insbesondere mit einer mittleren NCO-Funktionalität von 2.1 bis 2.6.

Handelt es sich um Oligomere abgeleitet von MDI, insbesondere mit einer mittleren NCO-Funktionalität von 2.1 bis 2.6, kann es dahingehend von Vorteil sein, dass dadurch ein besonders gutes Gleichgewicht zwischen Topfzeit, Klebfreizeit und schnellem Aufbau der Shore A und D Härten erreicht wird. Dies ist beispielsweise in Tabelle 8 im Vergleich von 21 und 24 mit 23 ersichtlich.

Es ist weiter vorteilhaft, wenn die Summe der NCO-Gruppen, welche nicht vom aromatischen Polyisocyanat **I** herrühren, ≤20%, insbesondere ≤10%, insbesondere bevorzugt ≤5%, am meisten bevorzugt ≤1 %, beträgt, bezogen auf die Summe aller NCO -Gruppen der Polyurethanzusammensetzung.

Vorzugsweise beträgt der Anteil des aromatischen Polyisocyanats I ≥ 90 Gew.-%, insbesondere ≥ 95 Gew.-%, insbesondere bevorzugt ≥99 Gew.-%, bezogen auf das Gesamtgewicht der zweiten Komponente.

Vorzugsweise weist die Polyurethanzusammensetzung einen Anteil an aliphatischen Polyisocyanaten von weniger als 5 Gew.-%, weniger als 2 Gew.-%, weniger als 1 Gew.-%, weniger als 0.5 Gew.-%, weniger als 0.1 Gew.-% auf, bezogen auf das Gesamtgewicht der Polyurethanzusammensetzung.

Vorzugsweise beträgt das Gewichtsverhältnis von Komponente (A): Komponente (B) 5: 1 bis 2: 1, bevorzugter 4: 1 bis 3: 1.

Vorzugsweise liegt das Molverhältnis zwischen freien NCO-Gruppen und NCO-reaktiven Gruppen, vorzugsweise OH-Gruppen, in der erfindungsgemäßen Zusammensetzung vor dem Mischen zwischen 0,8 - 1,2, vorzugsweise 0,9 - 1,1, insbesondere 0,95 - 1,05.

Die Polyurethanzusammensetzung enthält zusätzlich 5 Gew.-% bis 70 Gew.-% mindestens eines Füllstoffs **F,** bezogen auf das Gesamtgewicht der Polyurethanzusammensetzung. Der Füllstoff **F** kann sich in der ersten Komponente **A** oder in der zweiten Komponente **B** befinden, insbesondere befindet er sich der ersten Komponente **A.**

Vorzugsweise handelt es sich um Füllstoffe ausgewählt aus der Liste bestehend aus gemahlenen oder gefällten Calciumcarbonaten, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver und Hohlkugeln.

Bevorzugt enthält die Polyurethanzusammensetzung mindestens einen Füllstoff **F** ausgewählt aus der Gruppe bestehend aus Calciumcarbonat, Russ, Quarzsande, Kaolin, Baryt, Talk, Quarzmehl, Dolomit, Wollastonit, Kaolin, calciniertes Kaolin und Glimmer (Mica).

Als Füllstoffe **F** besonders bevorzugt sind Füllstoffe ausgewählt aus der Liste bestehend aus gemahlenen Calciumcarbonaten, calcinierte Kaoline, Quarzsande oder Baryt.

Es ist kann von Vorteil sein, eine Mischung verschiedener Füllstoffe einzusetzen. Am meisten bevorzugt sind Kombinationen von gemahlenen Calciumcarbonaten oder calcinierten Kaolinen und Baryt.

Vorzugsweise beträgt die Teilchengrösse der Füllstoffe **F** 0,1 bis 50 µm, bevorzugter 1 bis 30 µm.

Vorzugsweise beträgt der Anteil an Füllstoffen **F** 10 - 60 Gew.-%, 20 - 55 Gew.-%, 30 - 50 Gew.-%, insbesondere 40 - 50 Gew.-%, bezogen auf das Gesamtgewicht der Polyurethanzusammensetzung.

Die Polyurethanzusammensetzung enthält zusätzlich mindestens einen Zinnkatalysator **KSN** oder mindestens einen Bismutkatalysator **KBI.**

In Tabelle 3 ist ersichtlich, dass Zusammensetzungen, die einen Zirconium-, respektive Zink-Katalysator, in Kombination mit einer Verbindung T enthalten, eine Topfzeit, Klebfreizeit und einen Aufbau der Shore A und D Härten aufweisen, die sich wenig von einem unkatalysierten Systems unterscheiden. Die ist aus dem Vergleich von E1 mit E3 bis E6 in Tabelle 3 ersichtlich.

Vorzugsweise handelt es sich bei dem Zinnkatalysator **KSN** um eine Organozinn-Verbindung, insbesondere um eine Organozinn (IV)-Verbindung.

Insbesondere handelt es sich um einen Zinnkatalysator **KSN** ausgewählt aus der Liste bestehend aus Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat, Dioctylzinndiacetylacetonat, Bis[(2-ethyl-1-oxohexyl)oxy]dioctylstannan, Bis(neodecanoyloxy)dioctylstannan, Bis(dodecylthio)dioctylstannan und Bis(dodecylthio)dimethylstannan.

Insbesondere handelt es sich um Dibutylzinndilaurat, Dioctylzinndiacetylacetonat, Bis(neodecanoyloxy)dioctylstannan oder Bis(dodecylthio)dioctylstannan, besonders bevorzugt um Bis(neodecanoyloxy)dioctylstannan.

Vorzugsweise handelt es sich bei dem Bismutkatalysator **KBI** um eine Bismutverbindungen, was Komplexe und Salze dieser Metalle einschliesst.

Als Bismut-Verbindung kann eine Vielzahl von herkömmlichen Bismut- Katalysatoren verwendet werden. Dabei handelt es sich insbesondere um Bismutcarboxylate wie z.B. Bismut-Acetat, -Oleat, -Octoat oder -Neodecanoat, Bismutnitrat, Bismuthalogenide wie z.B. Bromid, Chlorid, lodid, Bismutsulfid, basische Bismutcarboxylate wie z.B. Bismutyl-neodecanoat, Bismut-subgallat oder Bismutsubsalicylat, sowie Gemische davon. Besonders bevorzugt handelt es sich um Bismutcarboxylate, insbesondere um Bismut-Neodecanoat.

Es kann vorteilhaft sein, wenn sich der Zinnkatalysator **KSN** oder der Bismutkatalysator **KBI** nur in der ersten Komponente **A** befindet.

Besonders bevorzugt ist der Zinnkatalysator **KSN** oder der Bismutkatalysator **KBI** nur in einer dritten Komponente **C,** bei welcher es sich nicht um die erste Komponente **A** oder die zweite Komponente **B** handelt, enthalten. Dies hat den Vorteil, dass dadurch die Topfzeit und Aushärtungszeit flexibel den Aushärtungsbedingungen angepasst werden können.

Vorzugsweise weist die Polyurethanzusammensetzung einen Anteil von weniger als 0.5 Gew.-%, weniger als 0.1 Gew.-%, weniger als 0.05 Gew.-%, weniger als 0.01 Gew.-%, weniger als 0.001 Gew.-%, bezogen auf das Gesamtgewicht der Polyurethanzusammensetzung, an Katalysatoren für die Reaktion von Hydroxylgruppen und Isocyanatgruppen auf, welche nicht vorgenannte Zinnkatalysatoren **KSN** oder Bismutkatalysatoren **KBI** sind. Insbesondere handelt es sich dabei um Metallkatalysatoren, insbesondere Zink- oder Zirkoniumverbindungen, was Komplexe und Salze dieser Metalle einschliesst, bevorzugt um Komplexverbindungen von Zirkonium (IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE).

Die Polyurethanzusammensetzung enthält zusätzlich mindestens eine Verbindung **T,** die mindestens eine Thiolgruppe aufweist. Als Thiolgruppe wird hier eine -SH Gruppe verstanden, die an einen organischen Rest, beispielsweise einen aliphatischen, cycloaliphatischen oder aromatischen Kohlenstoffrest, gebunden ist.

Bevorzugt sind Verbindungen mit 1 bis 6, insbesondere 2 bis 4, am meisten bevorzugt 2 oder 3 Thiolgruppen.

Geeignete Verbindungen **T** mit einer Thiolgruppe sind beispielsweise 3-Mercaptopropyltrimethoxysilan, 3-Mercaptopropyltriethoxysilan, 3-Mercapto-1,2-propandiol, 2-Mercaptotoluimidazol oder 2-Mercaptobenzothiazol.

Geeignete Verbindungen **T** mit mehr als einer Thiolgruppe sind vorzugsweise ausgewählt aus der Liste bestehend aus Ethylenglykol-di(3-mercaptopropionat), Ethylenglykol-dimercaptoacetat, Dipentaerythritol-hexa(3-mercaptopropionat), Trimethylolpropan tris(3-mercaptopropionat), 2,3-Dimercapto-1,3,4-thiadiazol, Pentaerythritol-tetrakis(3-mercaptopropionat) und 3,6-Dioxa-1,8-octandithiol.

Bevorzugt ist die Verbindung **T** ausgewählt aus der Gruppe bestehend aus Ethylenglykol-di(3-mercaptopropionat), Ethylenglykol-dimercaptoacetat und Dipentaerythritol-hexa(3-mercaptopropionat), am meisten bevorzugt Ethylenglykoldi(3-mercaptopropionat).

Falls die Polyurethanzusammensetzung einen Zinnkatalysator **KSN** enthält, liegt die Menge an Verbindung **T,** bezogen auf die gesamte Polyurethanzusammensetzung, bevorzugt im Bereich von 0.25 bis 3.0 Gew.-%, besonders bevorzugt 0.75 bis 2.25 Gew.-%, am meisten bevorzugt 1.25 bis 1.75 Gew.-%, bezogen auf die gesamte Polyurethanzusammensetzung.

Falls die Polyurethanzusammensetzung einen Bismutkatalysator **KBI** enthält, liegt die Menge an Verbindung **T,** bezogen auf die gesamte

Polyurethanzusammensetzung, bevorzugt im Bereich von 0.01 bis 0.06 Gew.-%, besonders bevorzugt 0.02 bis 0.05 Gew.-%, am meisten bevorzugt 0.03 bis 0.04 Gew.-%, bezogen auf die gesamte Polyurethanzusammensetzung. Gegebenenfalls als Liganden des Zinnkatalysators **KSN** oder des Bismutkatalysators **KBI** vorhandene Verbindungen, die mindestens eine Thiolgruppe aufweisen, wie beispielsweise Dodecylthiol in Bis(dodecylthio)dioctylstannan, werden zu der Gesamtmenge an Verbindung **T** in der Polyurethanzusammensetzung gezählt.

Bevorzugt ist die Verbindung **T** nur in einer dritten Komponente **C** enthalten. Vorzugsweise handelt es sich bei der dritten Komponente **C** um die vorgenannte Komponente **C** enthaltend den erwähnten Zinnkatalysator **KSN** oder Bismutkatalysator **KBI.**

Dies hat den Vorteil, dass dadurch eine bessere Lagerstabilität erreicht wird sowie Topfzeit und Aushärtungszeit flexibel den Aushärtungsbedingungen angepasst werden können.

Am meisten bevorzugt sind die Verbindung **T** und der Zinnkatalysator **KSN** oder Bismutkatalysator **KBI** nur in einer dritten Komponente **C** enthalten.

Enthält die erste Komponente **A** mindestens einen Zinnkatalysator **KSN** so liegt das molare Verhältnis aller Thiolgruppen der mindestens einen Verbindung **T** zu allen Metallatomen des mindestens einen Zinnkatalysators **KSN (T/KSN)** von 30 - 1200 und das molare Verhältnis aller NCO-Gruppen der Polyurethanzusammensetzung zu allen Metallatomen des mindestens einen Zinnkatalysators **KSN (NCO/KSN)** beträgt von 600 - 2600.

Vorzugsweise beträgt das molare Verhältnis **(T/ KSN**) 75 - 600, bevorzugt 125 - 400. Dies ist dahingehend von Vorteil, dass dadurch ein besonders gutes Gleichgewicht zwischen Topfzeit, Klebfreizeit und schnellem Aufbau der Shore A und D Härten erreicht wird. Dies ist beispielsweise in Tabelle 4 ersichtlich.

Vorzugsweise beträgt das molare Verhältnis **(NCO/ KSN)** 900 - 2400, bevorzugt 1200 - 2000. Dies hat den Vorteil, dass dadurch ein besonders gutes Gleichgewicht zwischen Topfzeit, Klebfreizeit und schnellem Aufbau der Shore A und D Härten erreicht wird. Dies ist beispielsweise in Tabelle 4 ersichtlich.

Enthält die erste Komponente **A** mindestens einen Bismutkatalysator **KBI** so liegt das molare Verhältnis aller Thiolgruppen der mindestens einen Verbindung **T** zu allen Metallatomen des mindestens einen Bismutkatalysators **KBI (T/KBI)** von 300 -1200 und das molare Verhältnis aller NCO-Gruppen der Polyurethanzusammensetzung zu allen Metallatomen des mindestens einen Bismutkatalysators **KBI (NCO/KBI)** beträgt von 2000 - 12500.

Vorzugsweise beträgt das molare Verhältnis (**T/KBI**) 350 - 900, bevorzugt 375 - 600. Dies ist dahingehend von Vorteil, dass dadurch ein besonders gutes Gleichgewicht zwischen Topfzeit, Klebfreizeit und schnellem Aufbau der Shore A und D Härten erreicht wird. Dies ist beispielsweise in Tabelle 6 im Vergleich von E33-E35, insbesondere E34, mit E32 und E36 ersichtlich.

Es ist weiter von Vorteil, wenn das molare Verhältnis **(NCO/KBI)** 3500 - 7000, bevorzugt 4000 - 6000, beträgt.

Es ist weiter für die vorliegende Erfindung vorteilhaft, wenn das molare Verhältnis aller NCO-Gruppen der Polyurethanzusammensetzung zu allen Thiolgruppen der mindestens einen Verbindung **T (NCO/T)** von 2 - 50, insbesondere 5 - 30, bevorzugt 7.5 - 15 beträgt.

In einer besonders bevorzugten Ausführungsform weist die Polyurethanzusammensetzung folgende molare Verhältnisse **(T/K), (NCO/K)** und **(NCO/T)** auf:
- **(T/KSN):** 75 - 600, bevorzugt 125 - 400, und **(NCO/KSN):** 900 - 2400, bevorzugt 1200 - 2000, und **(NCO/T):** 5 - 30, bevorzugt 7.5 - 15; oder
- (**T/KBI**): 350 - 900, bevorzugt 375 - 600, und **(NCO/KBI):** 3500 - 7000, bevorzugt 4000 - 6000, und **(NCO/T):** 5 - 30, bevorzugt 7.5 - 15.

Vorzugsweise weist die Polyurethanzusammensetzung einen Anteil an organischen Lösungsmitteln, insbesondere organischen Lösungsmitteln mit einem Siedepunkt bei 23 °C von weniger als 200 °C, von weniger als 7.5, von weniger als 5 Gew.-%, weniger als 2 Gew.-%, weniger als 1 Gew.-%, weniger als 0.5 Gew.-%, weniger als 0.1 Gew.-% auf, bezogen auf das Gesamtgewicht der Polyurethanzusammensetzung.

Bei den genannten organischen Lösungsmitteln handelt es sich insbesondere um organische Lösungsmittel ausgewählt aus der Liste bestehend aus Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Butylacetat, n-Butylpropionat, Diethylmalonat, 1-Methoxy-2-propylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Acetale wie insbesondere Methylal, Ethylal, Propylal, Butylal, 2-Ethylhexylal, Dioxolan, Glycerolformal oder 2,5,7,10-Tetraoxaundecan (TOU), Toluol, Xylol, Heptan, Octan, Naphtha, White Spirit, Petrolether oder Benzin, Methylenchlorid, Propylencarbonat, Butyrolacton, N-Methylpyrrolidon und N-Ethylpyrrolidon.

Vorzugsweise weist die Polyurethanzusammensetzung weiter einen Anteil an Weichmacher von 1-10 Gew.-%, 2 - 8 Gew.-%, 3-6 Gew.-%, insbesondere 3-5 Gew.-%, auf, bezogen auf das Gesamtgewicht der Polyurethanzusammensetzung. Solche Weichmacher sind insbesondere ausgewählt aus der Liste bestehend aus Carbonsäureester wie Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat bzw. Diisononylcyclohexan-1,2-dicarboxylat (DINCH), Terephthalate, insbesondere Dioctylterephthalat, Trimellitate, Adipate, insbesondere Dioctyladipat, Azelate, Sebacate, Benzoate, Glykolether, Glykolester, organische Phosphor- oder Sulfonsäureester, Polybutene und Polyisobutene.

Weiter kann es vorteilhaft sein, wenn die die Polyurethanzusammensetzung einen Anteil an vorgenannten Weichmachern von weniger als 5 Gew.-%, von weniger als 2 Gew.-%, weniger als 1 Gew.-%, weniger als 0.5 Gew.-%, weniger als 0.1 Gew.-% aufweist, bezogen auf das Gesamtgewicht der Polyurethanzusammensetzung.

Die Zusammensetzung kann weitere für Polyurethanzusammensetzungen gebräuchliche Zusätze enthalten. Insbesondere können die folgenden Hilfs- und Zusatzstoffe vorhanden sein:
- anorganische oder organische Pigmente, insbesondere Titandioxid, Chromoxide oder Eisenoxide;
- Fasern;
- Haftvermittler;
- Rheologie-Modifizierer;
- flammhemmende Substanzen;
- Additive, insbesondere Netzmittel, Verlaufmittel, Entschäumer, Entlüfter,

Stabilisatoren gegen Oxidation, Wärme, Licht oder UV-Strahlung oder Biozide; oder weitere üblicherweise in solchen Zusammensetzungen eingesetzte Substanzen.

Es ist besonders bevorzugt, wenn die Polyurethanzusammensetzung zusätzlich 0.05 - 3 Gew.-%, vorzugsweise 0.2 - 2.0 Gew.-%, insbesondere 0.5 - 1.5 Gew.-%, von mindestens einem Additiv ausgewählt aus der Liste bestehend aus Entschäumer und Entlüfter enthält, bezogen auf das Gesamtgewicht der Polyurethanzusammensetzung. Vorzugsweise enthält die Polyurethanzusammensetzung mindestens ein Additiv ausgewählt aus der Liste bestehend aus Entschäumer und Entlüfter, besonders bevorzugt ausgewählt aus der Liste bestehend aus Polyvinylalkylethern, Mineralölen, Siliconharzen, Siliconölen, Silicon-modifizierten Polyglykolen und Silicon-modifizierten Polyethern.

Als Entschäumer werden in diesem Dokument vorzugsweise Substanzen bezeichnet, die bei den unterschiedlichsten Prozessen eine Bildung von Schaum verhindern sollen. Vorzugsweise sind die Enschäumer ausgewählt aus der Liste bestehend aus Polyvinylalkylethern, Mineralölen, Siliconharzen und Siliconölen.

Als Entlüfter werden in diesem Dokument vorzugsweise Substanzen bezeichnet, die dafür sorgen, dass eingeschlossene Gase vor dem Abschluss der Filmbildung entweichen können. Vorzugsweise sind die Entlüfter ausgewählt aus der Liste bestehend aus Mineralölen, Siliconölen, Silicon-modifizierten Polyglykolen und Silicon-modifizierten Polyethern.

Die Polyurethanzusammensetzung enthält bevorzugt weniger als 0.5 Gew.-%, insbesondere weniger als 0.1 Gew.-%, bezogen auf die gesamte Zusammensetzung, an Carbonsäuren. Allenfalls durch den Metallkatalysator eingebrachte Carboxylatliganden zählen hierbei nicht zu den gemeinten Carbonsäuren. Auch gegebenenfalls in dem Polyol **P1** vorhandene Verbindungen mit Carbonsäuregruppen zählen hierbei nicht zu den gemeinten Carbonsäuren.

Die Polyurethanzusammensetzung enthält bevorzugt weniger als 0.5 Gew.-%, insbesondere weniger als 0.1 Gew.-%, weniger als 0.01 Gew.-%, besonders bevorzugt weniger als 0.001 Gew.-%, bezogen auf die gesamte Zusammensetzung, an einer tertiäre Säure der Formel RR'R"CCOOH, wobei jede R-, R'- und R"-Gruppe unabhängig eine Alkyl-, Alkenyl-, Aryl- oder Aralkylgruppe ist, die mindestens ein Kohlenstoffatom enthält, mit der Vorraussetzung, dass zwei oder drei der R-, R'- und R"-Gruppen verbunden werden können, um eine Ringstruktur zu bilden, und wobei die R-, R'- und / oder R"-Gruppen substituiert sein können und wobei die Gesamtzahl der Kohlenstoffatome in der R-, R'- und R"-Gruppen im Bereich von 3 bis 40 liegt.

Eine bevorzugte Polyurethanzusammensetzung umfasst eine erste Komponente A und eine zweite Komponente B, wobei
- die erste Komponente **A**
   - eine Polyolmischung **P** aufweist, enthaltend
      - mindestens ein Polyol **P1** mit einem durchschnittlichen Molekulargewicht von 800 bis 30'000 g / mol, vorzugsweise 850 bis 20'000 g / mol, bevorzugter 900 bis 10'000 g / mol, wobei das Polyol **P1** Rizinusöl oder eine chemische Modifikation davon ist, insbesondere eine chemische Modifikation von Rizinusöl, besonders bevorzugt ein Reaktionsprodukt von Rizinusöl mit Ketonharzen, vorzugsweise handelt es sich um ein Polyol mit einer OH-Zahl von 110 bis 200 mg KOH/g, 140 bis 190 mg KOH/g, insbesondere 140 bis 170 mg KOH/g, insbesondere bevorzugt 150 bis 170 mg KOH/g; und
      - vorzugsweise mindestens ein Polyol **P2** ausgewählt aus der Gruppe bestehend aus Polyesterpolyolen und Polyetherpolyolen, bevorzugt Polyetherpolyole, insbesondere bevorzugt Polyoxyethylenpolyole, Polyoxypropylenpolyole und Polyoxypropylenpolyoxyethylenpolyole, insbesondere Polyole mit einem mittleren Molekulargewicht im Bereich von 400 bis 6'000 g/mol, insbesondere 450 bis 5'500 g/mol, besonders bevorzugt 500 bis 5'000 g/mol, 750 bis 3'000 g/mol, am meisten bevorzugt 1'000 bis 2'000 g/mol, vorzugsweise Polyole mit einer mittleren OH-Funktionalität im Bereich von 2 bis 4, insbesondere 2 bis 3.5, besonders bevorzugt 2 bis 3;
      - wobei vorzugsweise das Gewichtsverhältnis des Polyols **P1** zum Polyol **P2 ((P1)** / **(P2))** von 1,25 bis 2,5, vorzugsweise 1,5 bis 2,25, am meisten bevorzugt 1,75 bis 2,0, beträgt; und
   - die zweite Komponente **B**
      - mindestens ein aromatisches Polyisocyanat **I** umfasst, insbesondere Oligomere, Polymere und Derivate abgeleitet von MDI, insbesondere Oligomere abgeleitet von MDI, insbesondere mit einer mittleren NCO-Funktionalität von 2.1 bis 2.6.

Die bevorzugte Polyurethanzusammensetzung umfasst weiter:
- 5 Gew.-% bis 70 Gew.-%, 10-55 Gew.-%, 15-50 Gew.-%, 20 - 50 Gew.-%, 25 - 45 Gew.-%, insbesondere 30 - 40 Gew.-%, mindestens eines Füllstoffs **F,** bezogen auf das Gesamtgewicht der Polyurethanzusammensetzung, insbesondere ausgewählt aus der Gruppe bestehend aus Calciumcarbonat, Russ, Quarzsande, Kaolin, Baryt, Talk, Quarzmehl, Dolomit, Wollastonit, Kaolin, calciniertes Kaolin und Glimmer (Mica); und
- mindestens einen Zinnkatalysator **KSN** für die Reaktion von Hydroxylgruppen und Isocyanatgruppen umfasst, der Thiokomplexe bilden kann, und mindestens eine Verbindung **T,** die mindestens eine Thiolgruppe aufweist, und das molare Verhältnis aller Thiolgruppen der mindestens einen Verbindung **T** zu allen Metallatomen des mindestens einen Zinnkatalysators **KSN (T/KSN)** von 30 - 1200 liegt und das molare Verhältnis aller NCO-Gruppen der Polyurethanzusammensetzung zu allen Metallatomen des mindestens einen Zinnkatalysators **KSN (NCO/KSN)** von 600 - 2600 liegt; oder
- mindestens einen Bismutkatalysator **KBI** für die Reaktion von Hydroxylgruppen und Isocyanatgruppen umfasst, der Thiokomplexe bilden kann, und mindestens eine Verbindung **T,** die mindestens eine Thiolgruppe aufweist, und das molare Verhältnis aller Thiolgruppen der mindestens einen Verbindung **T** zu allen Metallatomen des mindestens einen Bismutkatalysators **KBI (T/KBI)** von 300 - 1200 liegt und das molare Verhältnis aller NCO-Gruppen der Polyurethanzusammensetzung zu allen Metallatomen des mindestens einen Bismutkatalysators **KBI (NCO/KBI)** von 2000 - 12500 liegt.

Vorzugsweise weist die bevorzugte Polyurethanzusammensetzung folgende molare Verhältnisse **(T/K), (NCO/K)** und **(NCO/T)** auf:
- (**T/KSN**): 75 - 600, bevorzugt 125 - 400, und **(NCO/KSN):** 900 - 2400, bevorzugt 1200 - 2000, und **(NCO/T):** 5 - 30, bevorzugt 7.5 - 15; oder
- (**T/KBI**): 350 - 900, bevorzugt 375 - 600, und **(NCO/KBI):** 3500 - 7000, bevorzugt 4000 - 6000, und **(NCO/T):** 5 - 30, bevorzugt 7.5 - 15.

Vorzugsweise liegt das Molverhältnis zwischen freien NCO-Gruppen und NCO-reaktiven Gruppen, vorzugsweise OH-Gruppen, in der bevorzugten Zusammensetzung vor dem Mischen zwischen 0,8 - 1,2, vorzugsweise 0,9 -1,1, insbesondere 0,95 - 1,05.

Vorzugsweise enthält die bevorzugte Polyurethanzusammensetzung zusätzlich 0.05 - 3 Gew.-%, vorzugsweise 0.2 - 2.0 Gew.-%, insbesondere 0.5 - 1.5 Gew.-%, von mindestens einem Additiv ausgewählt aus der Liste bestehend aus Entschäumer und Entlüfter, bezogen auf das Gesamtgewicht der Polyurethanzusammensetzung, besonders bevorzugt ausgewählt aus der Liste bestehend aus Polyvinylalkylethern, Mineralölen, Siliconharzen, Siliconölen, Silicon-modifizierten Polyglykolen und Silicon-modifizierten Polyethern.

Vorzugsweise beträgt in der bevorzugten Polyurethanzusammensetzung die Gesamtmenge der Summe des Polyols **P1** und des Polyols **P2** mehr als 75 Gew .-%, vorzugsweise als 80 Gew .-%, als 90 Gew .-%, als 95 Gew .-%, insbesondere als 98 Gew .-%, der Polyolmischung **P.**

Vorzugsweise weist die Polyolmischung **P** mehr als 80 Gew .-%, mehr als 90 Gew .- %, mehr als 95 Gew .-%, insbesondere mehr als 98 Gew .-%, der Gesamtmenge der NCO-reaktiven Gruppen der bevorzugten Polyurethanzusammensetzung auf.

Vorzugsweise beträgt in der bevorzugten Polyurethanzusammensetzung der Anteil des aromatischen Polyisocyanats **I** ≥ 90 Gew.-%, insbesondere ≥ 95 Gew.-%, insbesondere bevorzugt ≥99 Gew.-%, bezogen auf das Gesamtgewicht der zweiten Komponente.

Besonders bevorzugt ist in der bevorzugten Polyurethanzusammensetzung der Zinnkatalysator **K** nur in einer dritten Komponente **C,** bei welcher es sich nicht um die erste Komponente **A** oder die zweite Komponente **B** handelt, enthalten.

Die Herstellung der beiden Komponenten **A** und **B** erfolgt getrennt voneinander und vorzugsweise unter Ausschluss von Feuchtigkeit. Beide Komponenten werden typischerweise jeweils in einem eigenen Gebinde gelagert. Die weiteren Bestandteile der Polyurethanzusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung enthaltend die erfindungsgemässe Polyurethanzusammensetzung, bestehend aus einer Verpackung mit mindestens zwei, insbesondere mindestens drei, vorzugsweise drei oder vier, am meisten bevorzugt drei, voneinander getrennten Kammern, welche jeweils die erste Komponente **A,** beziehungsweise die zweite Komponente **B,** respektive vorzugsweise die vorgehend erwähnte dritte Komponente **C,** der Polyurethanzusammensetzung enthält.

Besonders bevorzugt ist eine Packung bestehend aus einer Verpackung bestehend aus der vorgehend beschriebenen ersten Komponente **A,** der zweiten Komponente **B,** sowie der dritten Komponente **C.**

Die dritte Komponente **C** enthält insbesondere den vorgehend erwähnten Zinnkatalysator **KSN** oder Bismutkatalysator **KBI** und die vorgehend erwähnte Verbindung **T.** Vorzugsweise befinden sich der Zinnkatalysator **KSN** oder der Bismutkatalysator **KBI** und die Verbindung **T** ausschliesslich in der dritten Komponente **C.**

Das Mischen erfolgt typischerweise mit Hilfe von einem Handrührwerk. Beim Mischen ist darauf zu achten, dass die erste Komponente **A** und die zweite Komponente **B** möglichst homogen vermischt werden. Werden die zwei Komponenten unvollständig gemischt, treten lokale Abweichungen vom vorteilhaften Mischungsverhältnis auf, was sich in einer Verschlechterung der mechanischen Eigenschaften auswirken kann.

Beim Kontakt der ersten Komponente **A** mit der zweiten Komponente **B** beginnt die Aushärtung durch chemische Reaktion. Dabei reagieren die Hydroxylgruppen und gegebenenfalls vorhandene weitere gegenüber Isocyanatgruppen reaktive Substanzen mit den Isocyanatgruppen. Überschüssige Isocyanatgruppen reagieren vorwiegend mit Feuchtigkeit. Als Resultat dieser Reaktionen härtet die Polyurethanzusammensetzung zu einem festen Material aus. Dieser Vorgang wird auch als Vernetzung bezeichnet.

Ein weiterer Gegenstand der Erfindung ist somit auch eine ausgehärtete Polyurethanzusammensetzung, erhalten aus der Aushärtung der Polyurethanzusammensetzung wie im vorliegenden Dokument beschrieben.

Die Erfindung betrifft somit auch ein Verfahren zur Herstellung eines Bodenbelags unter Verwendung der erfindungsgemässen Polyurethanzusammensetzung , wobei das Verfahren umfasst:
a) Mischen der ersten Komponente **(A)** und der zweiten Komponente **(B),** sowie des mindestens einen Füllstoffs **F,** des mindestens einen Zinnkatalysators **KSN** oder Bismutkatalysators **KBI** sowie der mindestens einen Verbindung **T;**
b) Aufbringen des gemischten Materials auf ein Substrat,
c) gegebenenfalls Glätten des aufgetragenen Mischmaterials und
d) Härten des aufgetragenen Mischmaterials, um einen Bodenbelag zu erhalten.

Bei den in Schritt a) beschriebenen ersten Komponente **(A),** zweiten Komponente **(B),** Füllstoff **F,** Zinnkatalysator **KSN** oder Bismutkatalysator **KBI** und Verbindung **T** handelt es sich vorzugsweise um die vorgehend als bevorzugt ausgewiesenen Ausführungsformen ebensolcher. Besonders bevorzugt entsteht in Schritt a) eine Mischung der erfindungsgemässen Polyurethanzusammensetzung, insbesondere einer vorgehend als besonders bevorzugt ausgewiesenen Polyurethanzusammensetzung.

Vorzugsweise erfolgen die Schritte a) - d) in eben dieser chronologischen Abfolge.

Es ist weiter vorteilhaft, wenn die Schritte a) - d) die Schritte a) - d) im Temperaturbereich von ≤ 15 °C, insbesondere von 5 -15 °C, ausgeführt werden. Dies hat den Vorteil, dass dadurch gegenüber einem System ohne Katalysator und ohne Verbindung **T** besonders viel Zeit eingespart werden kann, um Klebfreiheit und eine Shore A 60 zu erreichen. Dies ist beispielsweise in Tabelle 5 ersichtlich, insbesondere im Vergleich von E29 und E26 mit E30 und E27, respektive E31 und E28.

Weiter kann es auch vorteilhaft sein, wenn die Schritte a) - d) die Schritte a) - d) im Temperaturbereich von 18-35 °C, insbesondere von 20 - 30 °C, ausgeführt werden. Dies ist dahingehend von Vorteil, dass dadurch gegenüber einem System ohne Katalysator und ohne Verbindung T ein besonders vorteilhaftes Verhältnis von Topfzeit zu Klebfreizeit erhalten werden kann und ein schnelles Erlangen der Shore A 60 erreicht wird. Dies ist beispielsweise in Tabelle 5 und Tabelle 7 ersichtlich. Vorzugsweise wird in Schritt a) eine vorgehend beschriebene Packung bestehend aus einer Verpackung bestehend aus der vorgehend beschriebenen ersten Komponente **A,** der zweiten Komponente **B** sowie gegebenenfalls der dritten Komponente **C** verwendet. Besonders bevorzugt wird dabei mindestens eines, vorzugsweise beide der vorgehend in 1) - 4) beschriebenen molaren Verhältnisse **(T/K)** und/oder **(NCO/K)** entsprechend der vorherrschenden Temperatur eingestellt.

In einer bevorzugten Ausführungsform wird das Verfahren verwendet, um einen Boden im Wohnbereich, Sportboden, Schul- und Krankenhausboden, Gewerbeboden, Boden im Marinebereich oder einen Industrieboden herzustellen.

Bevorzugte Substrate, auf die die Polyurethanzusammensetzung aufgebracht werden kann, sind ausgewählt aus der Liste bestehend aus Estrichböden, Betonböden und Zementböden.

Vorzugsweise ist das Substrat ein vorhandener Boden, vorzugsweise ein Boden vorbehandelt mit einer Polyurethangrundierung oder einer Epoxidharzgrundierung. Vorzugsweise hat diese Grundierung eine Dicke von 0.1 - 1 mm, insbesondere 0.3 - 0.7 mm.

Das Aufbringen der Polyurethanzusammensetzung kann durch jedes übliche Verfahren erfolgen, insbesondere Beschichten, Gießen, Vergießen, Spachteln. Der erhaltene Boden hat vorzugsweise eine Dicke von 0.1 - 15 mm, 0.5 - 10 mm, insbesondere 1 - 8 mm, 1.5-6 mm, 1.5-4 mm, besonders bevorzugt 1.5 - 3 mm.

Die Anwendungstemperatur für die Polyurethanzusammensetzung beträgt vorzugsweise 0 bis 40 °C, 8 bis 40 °C, vorzugsweise 12 bis 35° C, besonders bevorzugt 15 bis 30 °C, am meisten bevorzugt 18 bis 23°C.

Die Erfindung betrifft auch den Bodenbelag, vorzugsweise einen Boden im Wohnbereich, Sportboden, Schul-und Krankenhausboden, Gewerbeboden, Boden im Marinebereich oder einen Industrieboden, der durch das erfindungsgemäße Verfahren erhältlich ist. Die Erfindung betrifft auch die Verwendung der Polyurethanzusammensetzung als Bodenbelag für Wohn-, Sport-, Schul-, Krankenhaus-, Gewerbe-, Marine- oder Industrieböden, am meisten bevorzugt Wohn-, Sport-, Schul-, Krankenhaus- und Gewerbeböden.

Die Erfindung betrifft weiter die Verwendung der erfindungsgemässen Polyurethanzusammensetzung zur Herstellung von vorgehend beschriebenen Bodenbelägen.

Vorzugsweise hat die Polyurethanzusammensetzung die folgenden Eigenschaften, insbesondere bei Aushärtungsbedingungen bei 23 °C und 50 % relativer Luftfeuchtigkeit:
- Topfzeit, insbesondere gemessen wie im experimentellen Teil beschreiben: 15 min - 60 min, insbesondere 20 min - 45 min;
- Klebfreizeit, insbesondere gemessen wie im experimentellen Teil beschreiben: 20 min - 300 min, insbesondere 30 min - 80 min;
- Zeitdauer von der Mischung bis zum Erreichen einer Shore A-Härte 60, insbesondere gemessen wie im experimentellen Teil beschreiben: 30 min - 300 min, insbesondere 30 min - 100 min.

### Beispiele

### Verwendete Substanzen:

**Tabelle 1: Verwendete Substanzen.**

| | |
|---|---|
| P1 | Rizinusöl, OH-Zahl von 160 mg KOH/g |
| P2 | Polyoxypropylentriol, Hydroxylzahl: 350 - 600 mg KOH/g |
| Molekularsieb | Sylosiv^{®} A3 |
| Talk | Talk (Füllstoff) |
| Kreide | Omyacarb^{®} 5 GU (Omya); gemahlene natürliche Kreide (Füllstoff) |
| Schwerspat | Schwerspatmehl (Füllstoff) |
| Weichmacher | langkettiges Paraffin |
| MDI 1 | Suprasec 2029, Uretonimin-moditiziertes MDI, NCO-Gehalt 24.1 Gewichts-%, mittlere NCO-Funktionalität von 2.1, von Huntsman |
| MDI 2 | Desmodur^{®} VK 10, Gemisch von Diphenylmethan-4,4'-diisocyanat (MDI) mit Isomeren und höherfunktionellen |
| | Homologen (PMDI) mit einem NCO-Gehalt von 31,5 % und einem Polymeranteil von 38 Gew.-% und einem 2,4'-MDI-Anteil von 17 Gew.-%, von Covestro |
| MDI 3 | Isonate M 143, modifiziertes Diphenylmethandiisocyanat enthaltend MDI-Carbodiimid-Addukte, mittlere NCO-Funktionalität von 2.2, NCO-Gehalt 29.4 Gewichts-%, von Dow |
| GDMP | Thiocure^{®} 320 (Bruno Bock Thiochemicals); Glycol-di(3-mercaptopropionat), Molekulargewicht 238.3 g/mol, 2-funktional. |
| Sn-Kat | Dioctylzinndineodecanoat, TIB Kat 318, CAS 68299-15-0, 687.66 g/mol (Sn= 204.4 g/mol), Konzentration 100% |
| Bi-Kat | Bismuth-Neodecanoat, K-KAT XC-B221, (Bi=209 g/mol), Anteil Bi-Metall beträgt 20 Gewichts-%. |
| Zn-Kat | Zink bis(2-ethylhexanoat), VLIEGENTHART drier Zinc 12%, CAS 136-53-8, 251.8 g/mol (Zn=65.39 g/mol), Konzentration 60 %. |
| Zr-Kat | Zirconium Chelate, K-KAT 6212, CAS 17501-44-9, 487.66 g/mol (Zr=91.22 g/mol), Konzentration 5 %. |
| Additiv 1 | Entlüfter, Mischung aus Silikonöl und nichtionischen Tensiden, Agitan DF 311 M, Munzing |
| Additiv 2 | Silikonfreier Entlüfter, BYK A-501, BYK |

**Tabelle 2: Verwendete Polyurethanzusammensetzung.**

| **Komponente (A)** | Gewicht-% bezogen auf das Gewicht der Komponente (A) |
|---|---|
| P1 | 23.45 |
| P2 | 13.55 |
| Weichmacher | 4 |
| Talk (Füllstoff) | 5 |
| Kreide (Füllstoff) | 5 |
| Schwerspat (Füllstoff) | 39 |
| Molekularsieb | 7 |
| Additiv 1 | 0.8 |
| Additiv 2 | 0.2 |
| Pigment | 2 |
| Summe | 100 |
| | |

| **Komponente (B)** | Gewicht-% bezogen auf das Gewicht der Komponente (B) |
|---|---|
| MDI | 100 |
| Summe | 100 |

### Herstellung von Polyurethanzusammensetzungen und Messmethoden

Für jede Zusammensetzung wurden die in den Tabellen 3-8 angegebenen Inhaltsstoffe in den angegebenen Mengen (in Gewichtsteilen (Gew.-%)) der ersten Komponente **A** mittels eines Vakuumdissolvers unter Feuchtigkeitsausschluss zu einer homogenen Mischung verarbeitet und aufbewahrt. Ebenso wurden die in den Tabellen angegebenen Inhaltsstoffe der zweiten Komponente **B** verarbeitet und aufbewahrt. Die bei der Mischung der Komponenten zugegebene Art und Menge an Verbindung **T** und Zinnkatalysator **KSN,** respektive Bismutkatalysator **KBI,** Zinnkatalysator oder Zirkoniumkatalysator, sind in den Tabellen 3-8 aufgeführt. Das Molverhältnis zwischen freien NCO-Gruppen und NCO-reaktiven Gruppen betrug 1.0.

Zur Bestimmung der **Topfzeit** (TZ) wurden die beiden Komponenten vor der Prüfung der Topfzeit für 24 Stunden bei 23°C gelagert. Die Komponente A und anschließend die Komponente B sowie die Verbindung **T** und Zinnkatalysator **KSN,** respektive Bismutkatalysator **KBI,** Zinnkatalysator oder Zirkoniumkatalysator, wurden gemäß dem ausgewiesenen Mischungsverhältnis in einen Plastikbecher aus Polyethylen eingewogen, um eine Gesamtmenge von 35 - 75 ml zu erhalten. Mit einem Holzspatel wurde kurz und kräftig umgerührt, bis eine homogen vermischte Masse entstand. Der Holzspatel wurde in der angemischten Masse stehen gelassen und die Zeitmessung gestartet.

Nach Beginn der Zeitmessung wurde jede volle Minute der Holzspatel mit der flachen Seite senkrecht zur Paste zügig herausgezogen und kurz umgerührt. Als Topfzeit wurde die Zeit vom Anmischen bis zu dem Punkt definiert, an dem sich beim schnellen Abziehen des Spatels aus dem Material ein Widerstand spürbar wird.

Zur Bestimmung der **Klebfreizeit** wurden ungefähr 11 g der gemischten Zusammensetzung in eine runde Probenform aus Plastik mit einem Durchmesser von 7,3 cm gefüllt, um eine Dicke von 4 mm zu erreichen. Danach wurde im Abstand von einer Minute jeweils mit einem Watteball die Oberfläche berührt. Als Klebfreizeit wurde die Zeit vom Anmischen bis zu dem Punkt definiert, an dem der Watteball nicht mehr auf der Oberfläche kleben blieb.

Die Klebfreizeit gibt einen Wert wieder, der den Abschluss der Durchhärtung der Oberflächenhaut anzeigt, die dann nicht mehr klebrig ist.

Zur Bestimmung der **Aushärtungsgeschwindigkeit** wurde die Shore A und Shore D-Härten (Shore A, Shore D) von einem 2 mm Film auf hartem Untergrund bestimmt. Es wurde die Zeit in Minuten bestimmt, bis die Shore A 60, respektive Shore A 80 und Shore D 50, erreicht wurden. Weiter wurde die Endhärte der Shore D bestimmt. Die Härteprüfung nach Shore A 60 dient zur Abschätzung, wann der Härtegrad zur Begehung der Beschichtung ausreicht (Erreichen der Begehbarkeit).

Das Verhältnis von der Zeit zur Erreichung der Klebfreizeit geteilt durch die Zeit zur Erreichung der Topfzeit ist ausgewiesen als "Klebfreizeit / Topfzeit".

Die Komponenten A und B wurden bei den in den Tabellen 3-8 angegebenen Temperatur und relativer Feuchte (LF) temperiert. Die Komponenten werden ihrem Mischungsverhältnis entsprechend, gegebenenfalls unter Zugabe von Katalysator und Thiol-verbindung, mittels eines SpeedMixers^{®} (DAC 150 FV, Hauschild) während 120 Sekunden bei 2400 U/min gemischt. Im Augenblick des Mischstarts beginnt die Zeitmessung. Ungefähr 11 g der gemischten Zusammensetzung wurden in eine runde Probenform aus Plastik mit einem Durchmesser von 7,3 cm gefüllt, um eine Dicke von 4 mm zu erreichen. Diese wurde dann auf eine Stahlplatte als Substrat gelegt. Nach den angegebenen Zeitpunkten wurden die Shore A-Härtemessungen gemäss DIN EN ISO 868 (Version Oktober 2003) vorgenommen mit der Ausnahme, dass eine Schichtdicke von 4 mm verwendet wurde.

**Tabelle 3**

| | E1 | E2 | E3 | E4 | E5 | E6 |
|---|---|---|---|---|---|---|
| Temperatur/LF (23°C/50%) | | | | | | |
| Komponente A | 158 | 158 | 158 | 158 | 158 | 158 |
| GDMP | | 3 | 3 | 3 | 3 | 3 |
| Sn-Kat | | 0.1 | | | | |
| Zn-Kat | | | 0.1 | | 0.5 | |
| Zr-Kat | | | | 0.1 | | 0.5 |
| T/K | - | 173.1 | 105.7 | 2455.7 | 21.1 | 491.1 |
| NCO/K | - | 1807 | 1103 | 25632 | 221 | 5126 |
| | | | | | | |
| Komponente B (MDI 1) | 42 | 45.8 | 45.8 | 45.8 | 45.8 | 45.8 |
| | | | | | | |
| Topfzeit (min) | 73 | 19 | 77 | 86 | 65 | 62 |
| Klebfreizeit (min) | 598 | 56 | 617 | 461 | 423 | 447 |
| Klebfreizeit / Topfzeit | 8.2 | 2.9 | 8.0 | 5.4 | 6.5 | 7.2 |
| Shore A 60 (min) | 643 | 86 | 737 | 671 | 600 | 660 |
| Shore A 80 (min) | 1000 | 136 | 1080 | 1030 | 780 | 900 |
| Shore D 50 (min) | 1940 | 341 | 1950 | 2000 | 1800 | 2000 |
| Endhärte Shore D | 78 | 80 | 79 | 78 | 79 | 78 |

**Tabelle 4**

| | E7 | E8 | E9 | E10 | E11 | E12 | E13 | E14 | E15 | E16 | E17 | E18 | E19 | E20 | E21 | E22 | E23 | E24 | E25 |
|---|---|---|---|---|---|---|---|---|---|---|---|---|---|---|---|---|---|---|---|
| Temperatur/LF (23°C/50 %) | | | | | | | | | | | | | | | | | | | |
| Komponente A | 158 | 158 | 158 | 158 | 158 | 158 | 158 | 158 | 158 | 158 | 158 | 158 | 158 | 158 | 158 | 158 | 158 | 158 | 158 |
| GDMP | | 0.6 | 0.6 | 0.6 | 0.6 | 3 | 3 | 3 | 3 | 6 | 6 | 6 | 6 | 6 | 20 | 20 | 20 | 20 | 20 |
| Sn-Kat | | 0.1 | 0.2 | 0.4 | 1 | 0.1 | 0.2 | 0.4 | 1 | 0.1 | 0.2 | 0.4 | 0.8 | 1 | 0.1 | 0.2 | 0.4 | 0.8 | 1 |
| T/K | - | 34.6 | 17.3 | 8.7 | 3.5 | 173.1 | 86.6 | 43.3 | 17.3 | 346.3 | 173.1 | 86.6 | 43.3 | 34.6 | 1154.3 | 577.1 | 288.6 | 144.3 | 115.4 |
| NCO/K | - | 1683 | 842 | 421 | 168 | 1787 | 894 | 447 | 179 | 1918 | 959 | 479 | 240 | 192 | 2525 | 1263 | 631 | 316 | 253 |
| NCO/T | | 48.6 | 48.6 | 48.6 | 48.6 | 10.3 | 10.3 | 10.3 | 10.3 | 5.5 | 5.5 | 5.5 | 5.5 | 5.5 | 2.2 | 2.2 | 2.2 | 2.2 | 2.2 |
| | | | | | | | | | | | | | | | | | | | |
| Komponente B (MDI 1) | | 42.66 | 42.66 | 42.66 | 42.66 | 45.3 | 45.3 | 45.3 | 45.3 | 48.6 | 48.6 | 48.6 | 48.6 | 48.6 | 64 | 64 | 64 | 64 | 64 |
| | | | | | | | | | | | | | | | | | | | |
| Topfzeit (min) | 90 | 24 | 4 | 2 | 1 | 22 | 12 | 3 | 1 | 25 | 15 | 9 | 4 | 3 | 58 | 36 | 23 | 11 | 9 |
| Klebfreizeit (min) | 325 | 32 | 5 | 2 | 1 | 54 | 17 | 8 | 1 | 137 | 23 | 17 | 7 | 4 | 365 | 282 | 116 | 41 | 31 |
| Klebfreizeit / Topfzeit | 3.6 | 1.3 | 1.3 | 1.0 | 1.0 | 2.5 | 1.4 | 2.7 | 1.0 | 5.5 | 1.5 | 1.9 | 1.8 | 1.3 | 6.3 | 7.8 | 5.0 | 3.7 | 3.4 |
| Shore A 60 (min) | 760 | 42 | 9 | 4 | 2 | 89 | 30 | 10 | 2 | 180 | 57 | 25 | 8 | 5 | 755 | 342 | 169 | 44 | 32 |
| Shore A 80 (min) | 1120 | 117 | 18 | 11 | 3 | 119 | 63 | 16 | 5 | 233 | 80 | 40 | 13 | 10 | 965 | 392 | 204 | 70 | 36 |
| Shore D 50 (min) | 2725 | 490 | 60 | 14 | 5 | 375 | 130 | 61 | 21 | 422 | 113 | 75 | 22 | 19 | 1440 | 682 | 365 | 103 | 46 |

**Tabelle 5**

| | E26 | E27 | E28 | E29 | E30 | E31 |
|---|---|---|---|---|---|---|
| Temperatur/LF | 10°C/50% | 20°C/50% | 30°C/50% | 10°C/50% | 20°C/50% | 30°C/50% |
| Komponente A | 158 | 158 | 158 | 158 | 158 | 158 |
| GDMP | | | | 3 | 3 | 3 |
| Sn-Kat | | | | 0.1 | 0.1 | 0.1 |
| T/K | - | - | - | 173.1 | 173.1 | 173.1 |
| NCO/K | - | - | - | 1807 | 1807 | 1807 |
| | | | | | | |
| Komponente B (MDI 1) | 42 | 42 | 42 | 45.8 | 45.8 | 45.8 |
| | | | | | | |
| Topfzeit (min) | 120 | 79 | 65 | 33 | 22 | 15 |
| Klebfreizeit (min) | 1300.0 | 600.0 | 500.0 | 280 | 75 | 37 |
| Klebfreizeit / Topfzeit | 10.8 | 7.6 | 7.7 | 8.5 | 3.4 | 2.5 |
| Shore A 60 (min) | 1600 | 700 | 600 | 340 | 90 | 47 |
| Shore A 80 (min) | 1950 | 1400 | 1000 | 500 | 130 | 99 |
| Shore D 50 (min) | 2400 | 2100 | 1900 | 1900 | 300 | 262 |
| Endhärte Shore D | 77 | 77 | 77 | 78 | 79 | 79 |

**Tabelle 6**

| | E32 | E33 | E34 | E35 | E36 |
|---|---|---|---|---|---|
| Temperatur/LF (23°C/50 %) | | | | | |
| Komponente A | 158 | 158 | 158 | 158 | 158 |
| GDMP | 1 | 2 | 3 | 4 | 5 |
| Bi-Kat | 0.02 | 0.04 | 0.06 | 0.08 | 0.1 |
| T/K | 439 | 439 | 439 | 439 | 439 |
| NCO/K | 12920 | 6625 | 4530 | 3480 | 2850 |
| NCO/T | 29.5 | 15.1 | 10.3 | 7.9 | 6.5 |
| | | | | | |
| Komponente B (MDI 1) | 43.1 | 44.2 | 45.3 | 46.4 | 47.5 |
| | | | | | |
| Topfzeit (min) | 23 | 18 | 20 | 18 | 17 |
| Klebfreizeit (min) | 62 | 59 | 53 | 46 | 43 |
| Klebfreizeit / Topfzeit | 2.7 | 3.3 | 2.7 | 2.6 | 2.5 |
| Shore A 60 (min) | 65 | 62 | 54 | 49 | 45 |
| Shore A 80 (min) | 107 | 93 | 77 | 69 | 65 |
| Shore D 50 (min) | 379 | 247 | 184 | 141 | 139 |
| Endhärte Shore D | 76 | 77 | 76 | 77 | 77 |

**Tabelle 7**

| | E37 | E38 | E39 | E40 | E41 | E42 |
|---|---|---|---|---|---|---|
| Temperatur/LF | 23°C/50% | 13°C/50% | 23°C/50% | 13°C/50% | 23°C/50% | 13°C/50% |
| Komponente A | 158 | 158 | 158 | 158 | 158 | 158 |
| GDMP | 5 | 5 | 0 | 0 | 3 | 3 |
| Sn-Kat | 0 | 0 | 0 | 0 | 0.1 | 0.1 |
| Bi-Kat | 0.05 | 0.05 | 0 | 0 | 0 | 0 |
| T/K | 875 | 875 | - | - | 173.1 | 173.1 |
| NCO/K | 5700 | 5700 | - | - | 1807 | 1807 |
| | | | | | | |
| Komponente B (MDI 1) | 47.5 | 47.5 | 42 | 45.8 | 45.8 | 45.8 |
| | | | | | | |
| Topfzeit (min) | 17 | 17 | 120 | 65 | 33 | 37 |
| Klebfreizeit (min) | 40.0 | 95.0 | 600.0 | 800 | 54 | 300 |
| Klebfreizeit / Topfzeit | 2.4 | 5.6 | 5.0 | 12.3 | 1.6 | 8.1 |

**Tabelle 8, n.b. = nicht bestimmt**

| | E43 | E44 | E45 | E46 |
|---|---|---|---|---|
| Temperatur/LF (23°C/50 %) | | | | |
| Komponente A | 158 | 158 | 158 | 158 |
| GDMP | | 3 | 3 | 3 |
| Sn-Kat | | 0.1 | 0.1 | 0.1 |
| T/K | | 173.1 | 173.1 | 173.1 |
| NCO/K | | 1823 | 1857 | 1861 |
| | | | | |
| Komponente B | | | | |
| MDI 1 | 42 | 46.2 | | |
| MDI 2 | | | 36 | |
| MDI3 | | | | 39.2 |
| NCO-Gehalt MDI (%) | 24.1 | 24.1 | 31.5 | 29 |
| | | | | |
| Topfzeit (min) | 60 | 17 | 45 | 16 |
| Klebfreizeit (min) | 340.0 | 50.0 | 185 | 64 |
| Klebfreizeit / Topfzeit | 5.7 | 2.9 | 4.1 | 4.0 |
| Shore A 60 (min) | 890 | 66 | 205 | 76 |
| Shore A 80 (min) | 1100 | 133 | 1065 | 186 |
| Shore D 50 (min) | n.b. | 303 | n.b. | 866 |
| Endhärte Shore D | 78 | 80 | 76 | 74 |

## Patentansprüche

1. Polyurethanzusammensetzung umfassend eine erste Komponente **A** und eine zweite Komponente **B,** wobei
- die erste Komponente **A**
- eine Polyolmischung **P** aufweist, enthaltend
- mindestens ein Polyol **P1** mit einem durchschnittlichen Molekulargewicht von 800 bis 30'000 g / mol, vorzugsweise 850 bis 20'000 g / mol, bevorzugter 900 bis 10'000 g / mol, wobei das Polyol **P1** :
ein polyhydroxyfunktionelles Fett und / oder ein polyhydroxyfunktionelles Öl ist, oder
ein Polyol, das durch chemische Modifizierung von natürlichen Fetten und / oder natürlichen Ölen erhalten wird; und
- vorzugsweise mindestens ein Polyol **P2** ausgewählt aus der Gruppe bestehend aus Polyesterpolyolen und Polyetherpolyolen; und
- die zweite Komponente **B**
- mindestens ein aromatisches Polyisocyanat **I** umfasst;
wobei die Polyurethanzusammensetzung zusätzlich 5 Gew.-% bis 70 Gew.-%, vorzugsweise 20 Gew.-% bis 50 Gew.-%, mindestens eines Füllstoffs **F,** bezogen auf das Gesamtgewicht der Polyurethanzusammensetzung, aufweist; sowie
- mindestens einen Zinnkatalysator **KSN** für die Reaktion von Hydroxylgruppen und Isocyanatgruppen umfasst, der Thiokomplexe bilden kann, und mindestens eine Verbindung **T,** die mindestens eine Thiolgruppe aufweist, und das molare Verhältnis aller Thiolgruppen der mindestens einen Verbindung **T** zu allen Metallatomen des mindestens einen Zinnkatalysators **KSN (T/KSN)** von 30 - 1200 liegt und das molare Verhältnis aller NCO-Gruppen der Polyurethanzusammensetzung zu allen Metallatomen des mindestens einen Zinnkatalysators **KSN (NCO/KSN)** von 600 - 2600 liegt; oder
- mindestens einen Bismutkatalysator **KBI** für die Reaktion von Hydroxylgruppen und Isocyanatgruppen umfasst, der Thiokomplexe bilden kann, und mindestens eine Verbindung **T,** die mindestens eine Thiolgruppe aufweist, und das molare Verhältnis aller Thiolgruppen der mindestens einen Verbindung **T** zu allen Metallatomen des mindestens einen Bismutkatalysators **KBI (T/KBI)** von 300 - 1200 liegt und das molare Verhältnis aller NCO-Gruppen der Polyurethanzusammensetzung zu allen Metallatomen des mindestens einen Bismutkatalysators **KBI (NCO/KBI)** von 2000 - 12500 liegt.

2. Polyurethanzusammensetzung gemäss Anspruch 1, **dadurch gekennzeichnet, dass** das Polyol **P1** Rizinusöl oder eine chemische Modifikation davon ist, insbesondere eine chemische Modifikation von Rizinusöl, besonders bevorzugt ein Reaktionsprodukt von Rizinusöl mit Ketonharzen.

3. Polyurethanzusammensetzung gemäss einem der vorhergehenden Ansprüche, **dadurch gekennzeichnet, dass** das Polyol **P2** eine OH-Zahl im Bereich von 20 bis 600 mg KOH/g, 50 bis 600 mg KOH/g, 100 bis 600 mg KOH/g, insbesondere 200 bis 600 mg KOH/g, 300 bis 600 mg KOH/g, besonders bevorzugt 350 bis 600 mg KOH/g, aufweist.

4. Polyurethanzusammensetzung gemäss einem der vorhergehenden Ansprüche, **dadurch gekennzeichnet, dass** die Polyolmischung **P** mehr als 80 Gew .-%, mehr als 90 Gew .-%, mehr als 95 Gew .-%, insbesondere mehr als 98 Gew .-%, der Gesamtmenge der NCO-reaktiven Gruppen der Polyurethanzusammensetzung aufweist.

5. Polyurethanzusammensetzung gemäss einem der vorhergehenden Ansprüche, **dadurch gekennzeichnet, dass** es sich bei dem aromatischen Polyisocyanat **I** um Oligomere, Polymere und Derivate abgeleitet von MDI, insbesondere um Oligomere abgeleitet von MDI, insbesondere mit einer mittleren NCO-Funktionalität von 2.1 bis 2.6, handelt.

6. Polyurethanzusammensetzung gemäss einem der vorhergehenden Ansprüche, **dadurch gekennzeichnet, dass** der Zinnkatalysator **KSN** oder der Bismutkatalysator **KBI** nur in einer dritten Komponente **C,** bei welcher es sich nicht um die erste Komponente **A** oder die zweite Komponente **B** handelt, enthalten ist, vorzugsweise ist zusätzlich die Verbindung **T** nur in der dritten Komponente **C** enthalten.

7. Polyurethanzusammensetzung gemäss einem der vorhergehenden Ansprüche, **dadurch gekennzeichnet, dass** es sich bei der Verbindung **T** um Verbindungen mit 1 bis 6, insbesondere 2 bis 4, am meisten bevorzugt 2 oder 3 Thiolgruppen, handelt.

8. Polyurethanzusammensetzung gemäss einem der vorhergehenden Ansprüche, **dadurch gekennzeichnet, dass** das molare Verhältnis **(T/KSN)** 75 - 600, bevorzugt 125 - 400, beträgt.

9. Polyurethanzusammensetzung gemäss einem der vorhergehenden Ansprüche, **dadurch gekennzeichnet, dass** das molare Verhältnis **(T/KBI)** 350 - 900, bevorzugt 375 - 600, beträgt.

10. Polyurethanzusammensetzung gemäss einem der vorhergehenden Ansprüche, **dadurch gekennzeichnet, dass** das molare Verhältnis **(NCO/ KSN)** 900 - 2400, bevorzugt 1200 - 2000, beträgt.

11. Polyurethanzusammensetzung gemäss einem der vorhergehenden Ansprüche, **dadurch gekennzeichnet, dass** das molare Verhältnis **(NCO/KBI)** 3500 - 7000, bevorzugt 4000 - 6000, beträgt.

12. Polyurethanzusammensetzung gemäss einem der vorhergehenden Ansprüche, **dadurch gekennzeichnet, dass** das molare Verhältnis aller NCO-Gruppen der Polyurethanzusammensetzung zu allen Thiolgruppen der mindestens einen Verbindung **T (NCO/T)** von 2 - 50, insbesondere 5-30, bevorzugt 7.5 - 15 beträgt.

13. Polyurethanzusammensetzung gemäss einem der vorhergehenden Ansprüche, **dadurch gekennzeichnet, dass** die Polyurethanzusammensetzung folgende molare Verhältnisse **(T/K), (NCO/K)** und **(NCO/T)** aufweist:
- **(T/KSN):** 75 - 600, bevorzugt 125 - 400, und **(NCO/KSN):** 900 - 2400, bevorzugt 1200 - 2000, und **(NCO/T):** 5 - 30, bevorzugt 7.5 - 15; oder
- **(T/KBI):** 350 - 900, bevorzugt 375 - 600, und **(NCO/KBI):** 3500 - 7000, bevorzugt 4000 - 6000, und **(NCO/T):** 5 - 30, bevorzugt 7.5 - 15.

14. Polyurethanzusammensetzung gemäss einem der vorhergehenden Ansprüche, **dadurch gekennzeichnet, dass** die Polyurethanzusammensetzung zusätzlich 0.05 - 3 Gew.-%, vorzugsweise 0.2 - 2.0 Gew.-%, insbesondere 0.5 - 1.5 Gew.-%, von mindestens einem Additiv ausgewählt aus der Liste bestehend aus Entschäumer und Entlüfter enthält, bezogen auf das Gesamtgewicht der Polyurethanzusammensetzung, besonders bevorzugt ausgewählt aus der Liste bestehend aus Polyvinylalkylethern, Mineralölen, Siliconharzen, Siliconölen, Silicon-modifizierten Polyglykolen und Silicon-modifizierten Polyethern.

15. Packung bestehend aus einer Verpackung enthaltend die Polyurethanzusammensetzung gemäss Anspruch 1 - 14 mit mindestens zwei, insbesondere mindestens drei, vorzugsweise drei oder vier, am meisten bevorzugt drei, voneinander getrennten Kammern, welche jeweils eine erste Komponente **A** oder eine zweite Komponente **B,** wie sie für die Polyurethanzusammensetzung gemäss Anspruch 1-14 beschrieben sind, enthalten, oder vorzugsweise eine dritte Komponente **C,** wie sie für die Polyurethanzusammensetzung gemäss Anspruch 6 beschrieben ist.

16. Verfahren zur Herstellung eines Bodenbelags unter Verwendung einer Polyurethanzusammensetzung gemäss Anspruch 1 - 14, wobei das Verfahren umfasst:
a) Mischen der ersten Komponente **(A)** und der zweiten Komponente **(B),** sowie des mindestens einen Füllstoffs **F,** des mindestens einen Zinnkatalysators **KSN** oder Bismutkatalysators **KBI** sowie der mindestens einen Verbindung **T;**
b) Aufbringen des gemischten Materials auf ein Substrat,
c) gegebenenfalls Glätten des aufgetragenen Mischmaterials und
d) Härten des aufgetragenen Mischmaterials, um einen Bodenbelag zu erhalten.

17. Verfahren gemäss Anspruch 16, **dadurch gekennzeichnet, dass** die Schritte a) - d) im Temperaturbereich von ≤ 15 °C, insbesondere von 5 - 15 °C, ausgeführt werden.

18. Verfahren gemäss Anspruch 16, **dadurch gekennzeichnet, dass** die Schritte a) - d) im Temperaturbereich von 18 - 35 °C, insbesondere von 20 - 30 °C, ausgeführt werden.

19. Verfahren gemäss einem der Ansprüche 16 - 18, **dadurch gekennzeichnet, dass** in Schritt a) eine Packung gemäss Anspruch 15, insbesondere mit einer dritten Komponente C, verwendet wird.
